# EUROPÄISCHE PATENTANMELDUNG

(11) **EP 2 527 307 A1**
(43) Veröffentlichungstag der Anmeldung: **28.11.2012**
(21) Anmeldenummer: 11167673.0
(22) Anmeldetag: 26.05.2011
(51) Int. Cl.: C04B 24/12, C04B 28/02

(54) **Dialkanolamine als Additive zum Mahlen von Feststoffen**

(71) Anmelder: Sika Technology AG, 6340 Baar (CH)
(72) Erfinder: Marazzani, Beat, 8102 Oberengstringen (CH); Kurz, Christophe, 8165 Oberengstringen (CH); Bürge, Christian, 5503 Schafisheim (CH); Müller, Thomas, 69115 Heidelberg (DE)
(74) Vertreter: Sika Patent Attorneys

(57) **Zusammenfassung**

Die vorliegende Erfindung betrifft die Verwendung eines Aminoalkohols **A** und/oder eines Salzes des Aminoalkohols **A** als Additiv beim Mahlen mindestens eines Feststoffs, wobei der Aminoalkohol **A** eine Struktur gemäss Formel I aufweist: 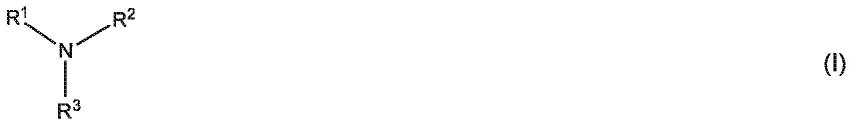 und wobei
a) R¹ und R² unabhängig voneinander je eine Alkanolgruppe mit 2 - 4 Kohlenstoffatomen darstellen, und
b) R³ ein Kohlenwasserstoffrest mit 1 - 8 Kohlenstoffatomen ist, und
c) R³ verschieden ist von R¹ und/oder R².

## Beschreibung

### Technisches Gebiet

Die Erfindung betrifft die Verwendung eines Aminoalkohols **A** und/oder eines Salzes des Aminoalkohols **A** als Additiv beim Mahlen mindestens eines Feststoffs, insbesondere eines anorganischen und/oder mineralischen Feststoffs. Zudem bezieht sich die Erfindung auf eine Zusammensetzung, einen ausgehärteten Formkörper und ein Verfahren zum Herstellen einer Bindemittelzusammensetzung.

### Stand der Technik

Ein zentraler Schritt und wesentlicher Kostenfaktor bei der Herstellung von mineralischen Bindemitteln, insbesondere Zement, ist das Mahlen der grobkörnigen mineralischen Komponenten zu feinem Pulver. So werden bei der Zementherstellung beispielsweise Klinker und, abhängig vom herzustellenden Zementtyp gegebenenfalls auch Zusatzstoffe, wie z.B. Hüttensand oder Kalkstein, zu feinen Pulver vermahlen. Zement und Zusatzstoffe können dabei grundsätzlich zusammen oder auch getrennt gemahlen werden.

Die Feinheit des mineralischen Bindemitteln ist dabei ein wichtiges Qualitätsmerkmal. Beispielsweise weisen ausgehärtete Mörtel- oder Betonmischungen mit fein gemahlenen mineralischen Bindemitteln im Allgemeinen höhere Druckfestigkeiten auf als entsprechende Mischungen auf der Basis von gröber gemahlenen mineralischen Bindemitteln.

Um das Zerkleinern von mineralischen Bindemitteln in Mühlen zu erleichtern und die Agglomeration der resultierenden pulverförmigen Teilchen zu verhindern können sogenannte Mahlhilfsmittel eingesetzt werden. Sie bewirken eine starke Reduktion der Mahldauer und des zur Mahlung erforderlichen Energieaufwandes. Als Mahlhilfsmittel haben sich seit den 60er-Jahren organische Flüssigkeiten bewährt, insbesondere Glykole und Aminoalkohole, sowie Mischungen davon. Sie werden in Mengen von bis zu ca. 0.1%, bezogen auf das Mahlgut, zusammen mit diesem der Zementmühle zugegeben. Dadurch kann bei gleicher Feinheit bzw. identischem Blainewert des Zementes die Mühlendurchsatzleistung um 20 bis 30%, bei manchen Anlagen sogar um bis zu 50% erhöht werden.

Ebenfalls bekannt ist die Verwendung von sogenannten Zementverbesserern. Dies sind Substanzen, welche insbesondere die Druckfestigkeiten von Mörtel-oder Betonmischungen beim Aushärten erhöhen. Dadurch lassen sich mit weniger fein gemahlenen mineralischen Bindemitteln Druckfestigkeiten wie mit feiner gemahlenen Bindemitteln erzielen. Entsprechend können auch durch die Verwendung von Zementverbesserern die Mühlendurchsatzleistungen erhöht werden.

Die US 5,084,103 (David F. Myers, W.R. Grace & Co.) beschreibt in diesem Zusammenhang beispielsweise Mahlhilfsmittel und Zementverbesserer auf Basis höherer Trialkanolamine wie Triisopropanolamin, N,N-bis(2-hydroxyethyl)-N-2-hydroxypropyl)amin und Tris(2-hydroxybutyl)amin.

Bekannte Mahlhilfsmittel und Zementverbesserer sind zwar durchaus wirksam. Es besteht aber nach wie vor Bedarf nach neuen und verbesserten Additiven für das Mahlen von Feststoffen, insbesondere bei der Herstellung von mineralischen Bindemitteln.

### Darstellung der Erfindung

Aufgabe der Erfindung ist es daher, ein verbessertes Additiv zum Mahlen von Feststoffen, insbesondere von anorganischen und/oder mineralischen Feststoffen, im Speziellen von zementösen Bindemitteln, zur Verfügung zustellen. Das Additiv soll insbesondere als Mahlhilfsmittel verwendbar sein, um die Mahleffizienz bei Mahlprozesse von Feststoffen, insbesondere mineralischen Bindemitteln, zu steigern. Bevorzugt soll das Additiv des Weiteren die Stoffeigenschaften der Feststoffe verbessern und insbesondere als Zementverbesserer wirken.

Überraschenderweise wurde gefunden, dass die erfindungsgemässe Aufgabe gemäss Anspruch 1 gelöst werden kann durch Verwendung eines Aminoalkohols **A** der Formel I 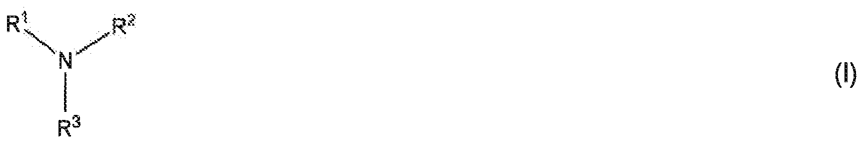 und/oder eines Salzes des Aminoalkohols **A** als Additiv beim Mahlen Feststoffs, insbesondere eines anorganischen und/oder mineralischen Feststoffs, im Speziellen bei der Herstellung von zementösen Bindemitteln, wobei
a) R¹ und R² unabhängig voneinander je eine Alkanolgruppe mit 2 - 4 Kohlenstoffatomen darstellen, und
b) R³ ein organischer Rest mit 1 - 8 Kohlenstoffatomen ist, und
c) R³ verschieden ist von R¹ und/oder R².

Wie sich bei Mahlversuchen überraschend gezeigt hat, kann im Vergleich mit bekannten Additiven mit den erfindungsgemässen Aminoalkoholen **A** oder deren Salzen bei gleicher Mahldauer eine erhöhte Mahleffizienz beim Mahlen von Feststoffen erzielt werden. Dies trifft insbesondere bei mineralischen Bindemitteln, im Speziellen zementösen Bindemitteln, zu. Bei gleicher Dosierung und gleicher Mahldauer kann mit den Aminoalkoholen **A** und/oder deren Salzen beim Mahlen von Feststoffen, insbesondere mineralischen Stoffen, somit ein deutlich feineres Pulver mit wesentlich grösserer spezifischer Oberfläche oder grösserem Blainewert erhalten werden. Darüber hinaus kann auch der Siebrückstand signifikant reduziert werden, was wiederum der Mahleffizienz zu Gute kommt.

Des Weiteren wurde gefunden, dass mit den erfindungsgemässen Aminoalkoholen **A** und/oder deren Salzen die Eigenschaften der Feststoffe verbessert werden können. Ein hoher Anteil der Substanzen übersteht dabei den Mahlprozess im Wesentlichen unbeschadet und kann auch nach dem Mahlvorgang die Eigenschaften der gemahlenen Feststoffe verbessern. Da die Aminoalkohole **A** und/oder deren Salze während dem Mahlprozess mit dem Feststoff vermischt und vermahlen werden, ergibt sich eine besonders gleichmässige Verteilung. Dies ist bei einer nachträglichen Zugabe der Aminoalkohole **A** und/oder deren Salze nicht in gleichem Masse erreichbar. Beispielsweise können die erfindungsgemässen Aminoalkohole **A** und/oder deren Salze als Zementverbesserer beim Mahlen von zementösen Bindemitteln verwendet werden. Die Druckfestigkeiten von Mörtel- und Betonmischungen mit derartig behandelten zementösen Bindemitteln lassen sich gegenüber zementösen Bindemitteln, welche ohne Aminoalkohole **A** und/oder deren Salze gemahlen wurden, signifikant erhöhen.

Allgemein können die Aminoalkohole **A** und/oder deren Salze als Additive, beispielsweise als Mahlhilfsmittel und/oder Zementverbesserer, beim Mahlen von unterschiedlichen mineralischen Bindemitteln verwendet werden. Dies können im Besonderen zementöse Bindemittel wie z.B. verschiedenste Zementsorten (CEM I, CEM II, CEM III, CEM IV, CEM V, sogenannte "grüne Zemente" und Belit-Zement) für Transport-, Orts-, Fertigteil- und Spritzbeton, sowie Mörtelanwendungen wie Reparaturmörtel, Grouts, Spritzmörtel oder dergleichen sein. Die Verarbeitbarkeit der mineralischen Bindemittel wird durch den Zusatz der erfindungsgemässen Aminoalkohole **A** und/oder deren Salze kaum oder gar nicht negativ beeinflusst.

Zudem sind die erfindungsgemässen Aminoalkohole **A** und/oder deren Salze auch kompatibel mit einer Vielzahl von anderen gängigen Additiven und Prozesschemikalien, welche beim Mahlen von Feststoffen eingesetzt werden. Die Aminoalkohole **A** und/oder deren Salze sind somit beim Mahlen von Feststoffen flexibel einsetzbar.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft die Verwendung eines Aminoalkohols **A** als Additiv beim Mahlen mindestens eines Feststoffs, insbesondere eines anorganischen und/oder mineralischen Feststoffs, wobei der Aminoalkohol **A** eine Struktur gemäss Formel I aufweist: 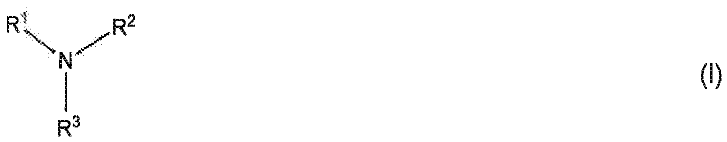 und wobei
a) R¹ und R² unabhängig voneinander je eine Alkanolgruppe mit 2 - 4 Kohlenstoffatomen darstellen, und
b) R³ ein organischer Rest mit 1 - 8 Kohlenstoffatomen ist, und
c) R³ verschieden ist von R¹ und/oder R².

Mit dem Begriff "Mahlen" oder "Mahlprozess" wird insbesondere ein Verfahren verstanden, bei welchem eine mittlere Korngrösse eines Feststoffs oder eines Gemischs von verschiedenen Feststoffen reduziert wird. Dies erfolgt beispielsweise in einer Mühle beim Mahlen von Klinker, gegebenenfalls zusammen mit inerten und/oder aktiven Zusatzstoffen, wie z.B. mit Gips, Anhydrit, α-Halbhydrat, β-Halbhydrat, latenthydraulischen Bindemitteln, puzzolanischen Bindemittel und/oder inerten Füllstoffen. Typischerweise wird der Feststoff oder das Gemisch von verschiedenen Feststoffen, insbesondere ein mineralisches Bindemittel, beim Mahlen auf einen Blaine-Wert von wenigstens 500 cm²/g, insbesondere wenigstens 1'000 cm²/g, bevorzugt wenigstens 2'000 cm²/g, noch weiter bevorzugt wenigstens 2'500 cm²/g, gemahlen. Der Mahlprozess oder das Mahlen des Feststoffs erfolgt insbesondere bei Temperaturen unter 300°C, bevorzugt unter 150°C, weiter bevorzugt unter 110°C. Besonders bevorzugte Temperaturen liegen zwischen 30 - 110°C, insbesondere 80 - 105°C.

Ein "Feststoff' ist im vorliegenden Zusammenhang insbesondere ein anorganischer und/oder mineralischer Feststoff. Insbesondere ist der Feststoff ein anorganischer Stoff für Bauzwecke, beispielsweise als Bestandteil für Zement-, Mörtel- und/oder Betonzusammensetzungen. Bevorzugt ist der Feststoff ein mineralisches Bindemittel und/oder ein Zusatzstoff für ein mineralisches Bindemittel. Der Feststoff kann grundsätzlich in grober Form, z.B. als (ungemahlener) Klinker, und/oder bereits teilweise vermahlen vorliegen.

Ein "mineralisches Bindemittel" ist dabei im Besonderen ein Bindemittel, insbesondere ein anorganisches Bindemittel, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke oder Hüttensand), ein puzzolanisches Bindemittel (z.B. Flugasche, Trass oder Reisschalenasche) und/oder ein nicht hydraulisches Bindemittel (Gips oder Weisskalk) sein. Auch Mischungen der verschiedenen Bindemittel sind möglich.

Ein "Zusatzstoff für ein mineralisches Bindemittel" ist beispielsweise ein inerter mineralischer Stoff wie z.B. Kalkstein, Quarzmehl und/oder Pigmente.

Unter einem "zementösen Bindemittel" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker verstanden.

Der Ausdruck "organischer Rest mit 1 - 8 Kohlenstoffatomen" steht insbesondere für lineare oder verzweigte Kohlenwasserstoffreste mit 1 bis 8 C-Atomen, welche gegebenenfalls ein oder mehrere Heteroatome und/oder gegebenenfalls eine oder mehrere C-C-Mehrfachbindungen und/oder gegebenenfalls cycloaliphatische und/oder aromatische Anteile aufweisen kann. Als Heteroatome können insbesondere N, O, P, S und/oder Si vorliegen.

Eine "Alkanolgruppe" verfügt vorliegend über eine oder mehrere Hydroxygruppen an einem gesättigten Alkylrest mit 2 - 4 Kohlenstoffatomen. Mit Vorteil verfügt die Alkanolgruppe über genau eine Hydroxygruppe. Der Alkylrest kann dabei grundsätzlich linear oder verzweigt sein. Die Hydroxygruppen können grundsätzlich als primäre und/oder sekundäre OH-Gruppen vorliegen. Die Alkanolgruppen sind insbesondere über ein Kohlenstoffatom an das N-Atom des Aminoalkohols **A** gebunden.

Gemäss einer vorteilhaften Ausführungsform der Erfindung wird der Aminoalkohol **A** und/oder dessen Salz als Mahlhilfsmittel zur Verbesserung der Mahleffizienz beim Mahlen eines mineralischen Stoffs verwendet, insbesondere beim Mahlen eines mineralischen Bindemittels. Als besonders geeignet haben sich die Aminoalkohole **A** und/oder deren Salze als Mahlhilfsmitel beim Mahlen von zementösen Bindemitteln oder Zementklinker erwiesen.

In einer anderen vorteilhaften Ausführungsform wird der Aminoalkohol **A** und/oder dessen Salz als Hilfsmittel zur Verbesserung der Stoffeigenschaften des Feststoffs, insbesondere zur Verbesserung von Zementeigenschaften beim Mahlen von zementösen Bindemitteln oder Zementklinker, eingesetzt. Besonders geeignet sind die Aminoalkohole **A** und/oder deren Salze als Zementverbesserer zur Erhöhung der Festigkeitsklasse des Zements oder zur Erhöhung der Druck- und/oder Biegzugfestigkeiten von Mörtel- und/oder Betonmischungen. Dadurch lassen sich beispielsweise Zemente herstellen, welche im Vergleich mit feiner gemahlenem Zement nach 1-28 Tagen, insbesondere nach 2, 7 und 28 Tagen, in Mörtel- und/oder Betonmischungen höhere Druckfestigkeiten bei vergleichbaren Biegezugfestigkeiten ergeben. Dies ist insofern vorteilhaft, als dass Zementklinker bei erfindungsgemässer Verwendung der Aminoalkohole **A** und/oder deren Salze gröber gemahlen werden kann und dennoch Festigkeitsklassen wie bei feiner gemahlenen Zementen erreicht werden. Entsprechend kann der Energie- und Zeitbedarf beim Mahlen reduziert bzw. die Mühledurchsatzleistung erhöht werden.

Ebenso ist es möglich, den Aminoalkohol **A** und/oder dessen Salz zugleich als Mahlhilfsmittel und als Hilfsmittel zur Verbesserung der Stoffeigenschaften des Feststoffs gleichzeitig einzusetzen. Dies insbesondere mit zementösen Bindemitteln.

Wie sich gezeigt hat, ist die Verwendung des Aminoalkohols **A** und/oder dessen Salzes insbesondere vorteilhaft, wenn der Feststoff ein hydraulisches Bindemittel, bevorzugt Zement und/oder Zementklinker, umfasst oder daraus besteht. Als Zement ist ein Zement mit einem Zementklinkeranteil von k 35 Gew.-% besonders bevorzugt. Insbesondere ist der Zement vom Typ CEM I, CEM II und/oder CEM IIIA (gemäss Norm EN 197-1).Ein Anteil des hydraulischen Bindemitels am gesamten Feststoff beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht der Feststoff zu ≥ 95 Gew.-% aus hydraulischem Bindemittel, insbesondere Zementklinker.

Es sind aber beispielsweise auch Verwendungen möglich, bei welchen der Feststoff andere Bindemittel enthält oder daraus besteht. Dies sind insbesondere latent hydraulische Bindemittel und/oder puzzolanische Bindemittel. Geeignete latenthydraulische und/oder puzzolanische Bindemittel sind z.B. Schlacke und/oder Flugasche. In einer vorteilhaften Ausführungsform enthält der Feststoff 5 - 95 Gew.-%, insbesondere 5-65 Gew.-%, besonders bevorzugt 15-35 Gew.-%, latenthydraulische und/oder puzzolanische Bindemittel. Auch möglich sind ≥ 95 Gew.-% latenthydraulische und/oder puzzolanische Bindemittel im Feststoff.

Ebenso kann der Aminoalkohol **A** und/oder dessen Salz auch beim Mahlen von inerten Feststoffen, z.B. mineralischen Stoffen, insbesondere Kalksteinmehl, Quarzmehl und/oder Pigmenten, eingesetzt werden.

Vorteilhaft ist insbesondere auch die Verwendung des Aminoalkohols **A** und/oder dessen Salzes mit Feststoffen, welche ein Gemisch aus einem hydraulischen Bindemittel, insbesondere Zementklinker, und einem latenthydraulischen und/oder puzzolanischen Bindemittel, bevorzugt Schlacke und/oder Flugasche, umfassen. Der Anteil des latenthydraulisches und/oder puzzolanisches Bindemittel beträgt dabei insbesondere 5-95 Gew.-%, besonders bevorzugt 5-65 Gew.-%, insbesondere bevorzugt 15- 35 Gew.-%, während wenigstens 35 Gew.-%, im Speziellen wenigstens 65 Gew.-%, des hydraulischen Bindemittels vorliegen. Des Weiteren kann im Gemisch zusätzlich ein inerter Stoff, z.B. Kalkstein, vorliegen. Solche Mischungen lassen sich nach dem Mahlen beispielsweise als Bindemittelkomponenten in Mörtel- und Betonmischungen einsetzen.

Insbesondere wird der Aminoalkohol **A** und/oder dessen Salz vor und/oder während einem Mahlprozess des Feststoffs zum Feststoff zugegeben. In einer bevorzugten Ausführungsform erfolgt die Zugabe vor dem Mahlprozess.

Der Aminoalkohol **A** und/oder das Salz des Aminoalkohols **A** kann z.B. als Reinsubstanz, insbesondere mit einer Reinheit von ≥ 95 Gew.-%, eingesetzt werden.

Vorteilhafterweise wird der Aminoalkohol **A** und/oder das Salz des Aminoalkohols **A** in flüssiger Form verwendet, insbesondere als Lösung oder Dispersion. Bevorzugt sind wässrige Lösungen und/oder Dispersionen mit einem Anteil des Aminoalkohols **A** und/oder des Salzes von 5-99 Gew.-%, bevorzugt 20 - 70 Gew.-%, insbesondere 30 - 50 Gew.-%. Damit wird eine optimale Vermischung mit dem Mahlgut erreicht.

Grundsätzlich kann der Aminoalkohol **A** und/oder das Salz des Aminoalkohols **A** aber auch in fester Form eingesetzt werden, z.B. als Pulver und/oder auf einem festen Trägermaterial aufgebracht.

Gemäss einer vorteilhaften Variante wird ein C₁- bis C₃-Carbonsäuresalz des Aminoalkohols **A** eingesetzt, wobei es sich insbesondere um ein Essigsäuresalz des Aminoalkohols **A** handelt. Dadurch können unter anderem Geruchsemissionen reduziert werden, ohne dass die Wirksamkeit der Additive als Mahlhilfsmittel oder Hilfsmittel zur Verbesserung der Stoffeigenschaften nennenswert beeinträchtigt werden. Das Salz des Aminoalkohols **A** kann dabei auch in Kombination mit reinem oder neutralem Aminoalkohol **A** eingesetzt werden.

In einer anderen vorteilhaften Ausführungsform wird der Aminoalkohol **A** alls solcher eingesetzt. In diesem Fall ist der Aminoalkohol **A** kein Salz, Dies erleichtert insbesondere die Handhabung des Aminoalkohols **A**.

Wie sich gezeigt hat, liegt ein Molekulargewicht M_{w} des Aminoalkohols **A** vorteilhafterweise im Bereich von 110 - 500 g/mol, insbesondere 110 - 300 g/mol, bevorzugt 120 - 300 g/mol, noch weiter bevorzugt 130 - 200 g/mol. Ein Molekulargewicht pro Alkoholgruppe (M_{w}/Anzahl OH) des Aminoalkohols **A** liegt dabei mit Vorteil im Bereich von 55 - 250 g/mol, insbesondere 60-150 gimol, bevorzugt 65-100 g/mol. Aminoalkohole mit derartigen Molekulargewichten zeigen eine optimale Wirkung. Die Molekulargewichte beziehen sich dabei auf die Aminoalkohole **A** als solche. Das Molekulargewicht eines allfälligen Gegenions in einem Salz des Aminoalkohols **A** ist entsprechend nicht mitgerechnet.

Besonders bevorzugt ist der Aminoalkohol **A** ein β-Aminoalkohol. Damit ist insbesondere gemeint, dass die Aminogruppe im Aminoalkohol **A** relativ zur Hydroxylgruppe in β-Position oder an einem β-Kohlenstoffatom gebunden ist. Bei mehreren Alkoholgruppen gilt dies insbesondere für sämtliche dieser funktionellen Gruppen. Entsprechend sind die Hydroxylgruppe der Alkoholgruppe und das Stickstoffatom der Amingruppe insbesondere an zwei unterschiedlichen und direkt benachbarten Kohlenstoffatomen gebunden.

Vorteilhafterweise weisen R¹ und/oder R² wenigstens eine sekundäre Alkoholgruppe auf. Insbesondere verfügen R¹ und/oder R² jeweils über genau eine Alkoholgruppe, welche zudem eine sekundäre Alkoholgruppe ist. R¹ und R² sind dabei mit Vorteil identisch. Derartige Alkanolgruppen haben sich im Hinblick auf die erfindungsgemässen Vorteil als besonders vorteilhaft erwiesen.

Prinzipiell können R¹ und/oder R² aber beispielsweise auch primäre oder tertiäre Alkoholgruppen aufweisen, wobei auch mehr als eine Alkoholgruppe pro Rest R¹ und/oder R² vorliegen kann.

Bevorzugt steht R¹ und/oder R² für eine Alkanolgruppe mit 3 Kohlenstoffatomen, im Besonderen für eine Isopropanolgruppe. Wie sich gezeigt hat, ist es besonders vorteilhaft, wenn R¹ und R² je für eine Isopropanolgruppe stehen. Isopropanolgruppen können auch als 2-Popanolgruppen bezeichnet werden. Damit treten die erfindungsgemässen Vorteile besonders stark in Erscheinung.

Prinzipiell ist es aber auch möglich, dass R¹ und/oder R² für eine n-Propanolgruppe oder 1-Propanolgruppe stehen. Dabei ist es auch möglich, Aminoalkohole **A** bzw. deren Salze vorzusehen, bei welchen z.B. R¹ für eine n-Propanolgruppe und R² für eine lsopropanolgruppe steht.

Im Speziellen ist R³ keine Aminoalkoholgruppe. Gemäss einer weiteren vorteilhaften Ausführungsform ist R³ ein Kohlenwasserstoffrest, welcher ausschliesslich aus C- und H-Atomen besteht, In diesem Fall ist R³ ein Kohlenwasserstoffrest ohne Heteroatome.

R³ ist mit Vorteil eine Alkylgruppe, eine Cycloalkylgruppe, eine Alkylarylgruppe oder eine Arylgruppe.

Besonders bevorzugt stellt R³ eine Alkylgruppe dar, insbesondere eine gesättigte Alkylgruppe. Besonders bevorzugt ist R³ eine Alkylgruppe mit 1 - 6 Kohlenstoffatomen, insbesondere mit 1 - 4 Kohlenstoffatomen.

Gemäss eine vorteilhaften Ausführungsform ist der Aminoalkohol **A** ein N-Alkyldiisopropanolamin. Besonders vorteilhaft ist ein N-Alkyldiisopropanolamin mit einer Alkylgruppe mit 1 - 6, insbesondere mit 1 - 4 Kohlenstoffatomen.

Insbesondere ist der Aminoalkohol **A** N-Methyldiisopropanoiamin, N-Ethyldiisopropanolamin, N-Propyldiisopropanolamin oder N-Butyldiisopropanolamin. Dabei ist N-Methyldiisopropanolamin am meisten bevorzugt.

Mit Vorteil wird der Aminoalkohol **A** und/oder dessen Salz in einer Menge von 0.001 - 1 Gew.-%, insbesondere 0.02-0.5 Gew.-%, bezogen auf das Gewicht des Feststoffs, verwendet. Bei Verwendung als Mahlhilfsmittel haben sich Anteile von 0.005 - 0.4 Gew.-%, insbesondere 0.02 - 0.3 Gew.-%, als besonders geeignet erwiesen. Bei der Verwendung als Hilfsmittel zur Verbesserung der Stoffeigenschaften des Feststoffs, insbesondere zur Verbesserung von Zementeigenschaften beim Mahlen von zementösen Bindemitteln, haben sich Anteile von 0.01 - 1 Gew.-%, im Speziellen 0.02 - 0.5 Gew.-%, als vorteilhaft erwiesen.

Wie sich gezeigt hat, wird bei derartigen Anteilen die MaNeffizienz signifikant verbessert bzw. die Stoffeigenschaften des gemahlenen Feststoffs können markant gesteigert werden. Andere Anteile sind aber grundsätzlich auch möglich.

Gemäss einer weiteren vorteilhaften Ausführungsform wird der Aminoalkohol **A** in Kombination mit wenigstens einem weiteren Additiv eingesetzt.

Grundsätzlich können hierbei eine Vielzahl von dem Fachmann bekannten Substanzen eingesetzt werden, welche insbesondere als Mahlhilfsmittel und/oder Hilfsmittel zur Verbesserung der Stoffeigenschaften eines Feststoffs, insbesondere eines mineralischen Stoffs, wirken. Besonders vorteilhaft umfasst das weitere Additiv ein oder mehrere der folgenden Vertreter:
a) ein oder mehrere weitere Aminoalkohole und/oder deren Salze, weiche sich insbesondere vom Aminoalkohol **A** und/oder dessen Salz unterscheiden,
b) ein oder mehrere Glykole und/oder Glykolderivate,
c) ein oder mehrere Polycarboxylate und/oder Polycarboxylatether.

Als Polycarboxylatether sind dabei beispielsweise die in W02005/123621 A1 beschriebenen Polymere geeignet, welche ebenfalls als Mahlhilfsmittel wirken. Vorteilhafte weitere Aminoalkohole sind insbesondere Trialkanolamine und/oder Dialkanolamine. Bevorzugt sind Triisopropanolamin, Triethanolamin und/oder Diethanolamin.

Wie sich gezeigt hat, sind die erfindungsgemässen Aminoalkohole **A** mit diesen Vertretern von weiteren Additiven im Allgemeinen gut kompatibel. Damit lässt sich beispielsweise eine flexible Anpassung an spezielle Verwendungen und/odereine kostenmässige Optimierung bei der Herstellung der Additive realisieren.

Ebenso kann es vorteilhaft sein, wenn der Aminoalkohol **A** und/oder dessen Salz in Kombination mit wenigstens einem Zusatzmittel, beispielsweise ein Betonzusatzmittel und/oder ein Mörtelzusatzmittel, verwendet wird. Das wenigstens eine Zusatzmittel umfasst insbesondere einen Entschäumer, einen Farbstoff, ein Konservierungsmittel, ein Fliessmittel, einen Verzögerer, einen Luftporenbildner, einen Schwindreduzierer und/oder einen Korrosionsinhibitor und/oder Mischungen davon.

Mit Vorteil beinhaltet das wenigstens eine Zusatzmittel ein Fliessmittel. Dieses beinhaltet im Speziellen ein Polycarboxylat, insbesondere einen Polycaboxylatether. Insbesondere ist das Fliessmittel ein Kammpolymer umfassend ein Polycarboxylatrückgrat mit daran gebundenen Polyetherseitenketten. Die Seitenketten sind dabei insbesondere über Ester-, Ether- und/oder Amidgruppen an das Polycarboxylatrückgrat gebunden.

Entsprechende Polycarboxylatether und Herstellungsverfahren sind beispielsweise offenbart in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in deren Beispielen. In einer Abart davon, wie sie in EP 1 348 729 A1 auf Seite 3 bis Seite 5 sowie in deren Beispielen beschrieben sind, kann das Kammpolymer in festem Aggregatszustand hergestellt werden. Die Offenbarung dieser genannten Patentschriften wird hiermit insbesondere durch Bezugnahme eingeschlossen.

Derartige Kammpolymere werden auch von Sika Schweiz AG unter der Handelsnamenreihe ViscoCrete® kommerziell vertrieben.

Falls vorhanden, weist das Fliessmittel bezogen auf den Feststoff, welcher insbesondere ein mineralisches Bindemittel ist, mit Vorteil einen Anteil von 0.01 - 6 Gew.-%, insbesondere 0.1 - 4 Gew.-%, weiter bevorzugt 0.5 - 3 Gew.-%, auf. Aufgrund der Kombination mit dem Fliessmittel kann die Verarbeitbarkeit einer Bindemittelzusammensetzung verbessert werden und zugleich werden höhere Druckfestigkeiten erreicht.

Ein weiterer Aspekt der vorliegenden Erfindung betrifft eine Zusammensetzung enthaltend einen Feststoff, insbesondere einen mineralischen und/oder anorganischen Feststoff, bevorzugt ein mineralisches Bindemittel, und einen wie vorstehend beschriebenen Aminoalkohol **A** der Formel **I** und/oder ein Salz des Aminoalkohols **A**. Eine Zusammensetzung enthaltend ein mineralisches Bindemittel oder einen Bindemittelzusammensetzung, kann z.B. in trockener Form oder als eine mit Anmachwasser angemachte fluide oder angesteifte Bindemittelzusammensetzung vorliegen. Der Aminoalkohol **A** liegt dabei im Besonderen in den vorstehend genannten Mengen vor.

Mit Vorteil ist zudem ein wie vorstehend beschriebenes Zusatzmittel vorhanden. Das Zusatzmittel umfasst insbesondere ein Fliessmittel, bevorzugt ein Polycarboxylatether. Falls vorhanden, weist das Fliessmittel bezogen auf das mineralische Bindemittel mit Vorteil einen Anteil von 0.01 - 6 Gew.-%, insbesondere 0.1-4 Gew.-%, weiter bevorzugt 0.5 - 3 Gew.-%, auf.

In einer weiteren bevorzugten Ausführungsform enthält eine Bindemittelzusammensetzung zusätzlich feste Aggregate, insbesondere Kies, Sand und/oder Gesteinskörnungen. Entsprechende Zusammensetzungen können beispielsweise als Mörtelmischungen oder Betonmischungen eingesetzt werden.

Insbesondere enthält die Bindemittelzusammensetzung zusätzlich Wasser, wobei ein Gewichtsverhältnis von Wasser zu mineralischem Bindemittel bevorzugt im Bereich von 0.25 - 0.8, insbesondere 0.3 - 0.6, bevorzugt 0.35 - 0.5, liegt. Derartige Bindemittelzusammensetzungen lassen sich als Mörtel- oder Betonmischungen direkt verarbeiten.

Ein zusätzlicher Aspekt der vorliegenden Erfindung bezieht sich auf einen Formkörper, welcher erhältlich ist durch Aushärten einer wie vorstehend beschriebenen Bindemittelzusammensetzung nach Zugabe von Wasser. Der so hergestellte Formkörper kann dabei nahezu jede beliebige Form aufweisen und beispielsweise Bestandteil eines Bauwerks, wie z.B. eines Gebäudes, eines Mauerwerks oder einer Brücke, sein.

Weiter bezieht sich die vorliegende Erfindung auf ein Verfahren zur Herstellung einer Zusammensetzung enthaltend einen Feststoff, insbesondere einen mineralischen und/oder anorganischen Feststoff. Dabei wird ein wie vorstehend beschriebener Aminoalkohol **A** gemäss Formel und/oder ein Salz des Aminoalkohols **A** mit einem Feststoff, insbesondere einem mineralischen Bindemittel, bevorzugt einem zementösen Bindemittel, vermischt und vermahlen. Der Feststoff kann dabei wie vorstehend beschrieben vorliegen und insbesondere die oben genannten hydraulischen, latenthydraulischen und/oder puzzolanischen Bindemittel enthalten. Ebenfalls kann der Feststoff inerte Zusatzstoffe aufweisen. Zudem können die vorstehend genannten weiteren Additive und/oder Zusatzmittel in den entsprechenden Mengen beigegeben werden.

Aus den nachfolgenden Ausführungsbeispielen erschlossen sich dem Fachmann weitere vorteilhafte Ausführungsformen der Erfindung.

### Ausführungsbeispiele

### 1. Verwendete Additive

Folgende Additve **A**1 **- A**7 wurden für die Ausführungsbeispiele verwendet (Tabelle 1):

**Tabelle 1**

| **Bezeichnung** | **Zusammensetzung** |
|---|---|
| **A1** | N-Methyldiisopropanoiamin (MDiPA; 40 Gew.-% in H₂0) |
| **A2** | Triisopropanolamin (TIPA; 40 Gew.-% in H₂0) |
| **A3** | Diethanolamin (DEA; 40 Gew.-% in H₂0) |
| **A4** | Triethanolamin (TEA; 40 Gew.-% in H₂0) |
| **A5** | 1:1-Mischung aus TiPA und MDiPA (40 Gew.-% in H₂0) |
| **A6** | 1:1-Mischung aus DEA und MDIPA (40 Gew.-% in H₂0) |
| **A7** | 1:1-Mischung aus TEA und MDiPA (40 Gew.-% in H₂0) |

Sämtliche der in Tabelle 1 aufgeführten Aminoalkohole sind kommerziell bei verschiedenen Anbietern in Reinform (Reinheit > 97%) erhältlich. Die 1:1-Mischungen bestehen dabei jeweils aus einer Mischung mit gleichen Gewichtsanteilen der angegebenen Aminoalkohole.

### 2, Mahlversuche

Zur Bestimmung der Wirksamkeit der verschiedenen Additive **A1** - **A7** als Mahlhilfsmittel wurden in den Mahlversuchen **M1** - **M7** jeweils 300 g eines Zementklinkers (Vigier) unter identischen Bedingungen mit den in Tabelle 2 angegebenen Additiven auf Laborkugelmühlen gemahlen. Versuch **M0** ist eine Referenzprobe ohne Additiv. Die Dosierungen der Additive **A1** - **A7** betrugen durchwegs 0.02 Gew.-% (Menge an reinem Aminoalkohol ohne H₂0, bezogen auf Zementklinker). Die Mahldauer wurde bei allen Mahlversuchen konstant gehalten. Die Temperatur des Mahlguts lag im Bereich von 94.9 - 99.8°C.

Nach erfolgtem Mahlvorgang wurde die Feinheit nach Blaine sowie der Siebrückstand der Partikel über 32 µm (in Gew.-% bezogen auf sämtliche Partikel) analog Norm EN 196-6 (Mai 2010) mit einem 32 µm Sieb bestimmt. Die Resultate wurden zudem durch Lasergranulometrie verifiziert.

Tabelle 2 gibt einen Überblick über die durchgeführten Mahlversuche und die entsprechenden Resultate.

**Tabelle 2**

| **Versuch** | **M0** | **M1** | **M2** | **M3** | **M4** | **M5** | **M6** | **M7** |
|---|---|---|---|---|---|---|---|---|
| Additiv | - | **A1** | **A2** | **A3** | **A4** | **A5** | **A6** | **A7** |
| Feinheit [cm²/g] | 1985 | 2905 | 2745 | 2745 | 2515 | 2860 | 2875 | 2815 |
| Siebrückstand > 32 µm [Gew.-%] | 39.4 | 26.5 | 28.7 | 29.5 | 32.1 | 27.3 | 27.0 | 27.9 |

Aus Tabelle 2 ist insbesondere ersichtlich, dass bei der Verwendung von Additiv **A1** (MDiPA; Versuch **M1**) die höchste Feinheit als auch der geringste Siebrückstand erreicht wird. Die Additive **A2** - **A4** bringen zwar gegenüber dem Referenzversuch ohne Additiv (**M0**) eine Verbesserung, schneiden aber klar schlechter ab als Additiv **A1**. Additive **A5** - **A7** (Versuche **M5** - **M7**), welche allesamt Mischungen aus MDiPA und einem der Additive **A2** - **A4** darstellen, liefern bessere Ergebnisse als die Additive **A2** - **A4** alleine.

### 3. Mörtelversuche

Ebenfalls untersucht wurde die Wirksamkeit von Additiv **A1** als Zementverbesserer. Hierfür wurde ausgehend von identischem Zementklinker (Vigier) drei Zementmischungen **Z0** - **Z2** mit jeweils unterschiedlichen Feinheiten hergestellt. **Z0** ist eine Referenzprobe, weiche ohne Zugabe eines Additivs gemahlen wurde. Bei den Zementmischungen **Z1** und **Z2** wurde Additiv **A1** jeweils vor dem Mahlprozess in den in Tabelle 2 angegebenen Dosierungen (Menge an reinem Aminoalkohol ohne H₂O, bezogen auf Zementklinker) zum Zementklinker gegeben und mit diesem Vermahlen. Die Zementmischungen **Z0** - **Z2** wurden anschliessend als Bindemittel in Mörtelmischungen **MM0** - **MM2** verwendet.

Zum Anmachen der Mörtelmischungen **MM0** - **MM2** wurden Sande, Kalksteinfüller und jeweils eine der Zementmischungen **Z0** - **Z2** 1 Minute in einem Hobart-Mischer trocken gemischt. Innerhalb von 30 Sekunden wurde das Anmachwasser, in dem ein Fliessmittel (Sika Viscocrete 1.0 Gew.-% bezogen auf Bindemittel) dispergiert war, zugegeben und noch weitere 2.5 Minuten gemischt. Die Gesamt-Mischzeit nass dauerte jeweils 3 Minuten. Der Wasser/Zement-Wert (w/z-Wert) betrug 0.4.

Die Druck- als auch die Biegezugfestigkeiten der Mörtelmischungen **MM0** - **MM2** wurden 1, 2, 7 und 28 Tage nach dem Anmachen der Mörtelmischungen bestimmt. Die Bestimmung der Druckfestigkeit (in N/mm²) erfolgte an Prismen (40 x 40 x 160 mm) gemäss Norm EN 12390-1 bis 12390-4. Die Biegezugfestigkeit wurde mit entsprechenden Prismen als Probekörpern gemäss Norm EN 12390-5 (1-Punkt Lastangriff mittig) gemessen.

Die Mörtelmischungen weisen die in Tabelle 3 beschriebenen Trockenzusammensetzungen und Eigenschaften nach dem Anmachen mit Wasser auf (w/z = 0.4).

**Tabelle 3**

| **Mörtelmischung** | **MM1** | **MM2** | **MM3** |
|---|---|---|---|
| Zement | **20** | **Z1** | **Z2** |
| - Eingesetzte Menge [g] | 750 | 750 | 750 |
| - Feinheit nach Blaine [cm²/g] | 3500 | 3370 | 3410 |
| - Siebrückstand > 32 µm [Gew.-%] | 15.2 | 8.6 | 11.0 |
| Additiv (Zugabe vor Mahlprozess) | Keines | **A1** | **A1** |
| - Dosierung bez. Klinker [Gew.-%] | 0 | 0.1 | 0.2 |
| Kalksteinfüller | 141 g | | |
| Sand 0-1 mm | 738 g | | |
| Sand 1-4 mm | 1107g | | |
| Sand 4-8 mm | 1154g | | |

| Druckfestigkeit [MPa] | | | |
|---|---|---|---|
| - 1 Tage | 19.2 | 18.3 | 17.4 |
| - 2 Tage | 29.9 | 31.7 | 30.9 |
| - 7 Tage | 46.8 | 53.1 | 51.6 |
| - 28 Tage | 58.4 | 68.0 | 67.0 |

| Biegezugfestigkeit [MPa] | | | |
|---|---|---|---|
| - 1 Tage | 3.6 | 3.5 | 3.4 |
| - 2 Tage | 5.7 | 4.9 | 5.0 |
| - 7 Tage | 6.4 | 7.3 | 6.5 |
| - 28 Tage | 7.4 | 7.5 | 7.4 |

Aus Tabelle 3 ist zu entnehmen, dass die Zugabe von Additiv **A1** in den Mörtelversuchen **MM1** und **MM2** im Vergleich mit der Referenzprobe bereits nach 2 Tagen trotz weniger fein gemahlenem Zement zu höheren Druckfestigkeiten und vergleichbaren Biegezugfestigkeiten führt. Damit wirkt Additiv **A1** als Zementverbesserer, welcher es ermöglicht, die Druckfestigkeit von Zement bei geringerem Mahlgrad signifikant zu verbessern.

Die vorstehend beschriebenen Ausführungsformen sind jedoch lediglich als illustrative Beispiele zu verstehen, weiche im Rahmen der Erfindung beliebig abgewandelt werden können.

## Patentansprüche

1. Verwendung eines Aminoalkohols **A** und/oder eines Salzes des Aminoalkohols **A** als Additiv beim Mahlen mindestens eines Feststoffs, insbesondere eines anorganischen und/oder mineralischen Feststoffs, wobei der Aminoalkohol **A** eine Struktur gemäss Formel aufweist: 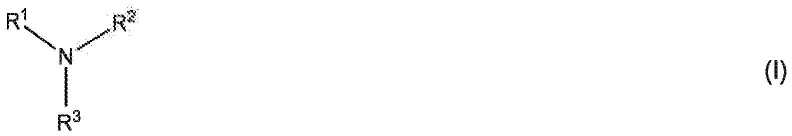 und wobei
a) R¹ und R² unabhängig voneinander je eine Alkanolgruppe mit 2 - 4 Kohlenstoffatomen darstellen, und
b) R³ ein organischer Rest mit 1 - 8 Kohlenstoffatomen ist, und
c) R³ verschieden ist von R¹ und/oder R².

2. , Verwendung nach Anspruch 1, **dadurch gekennzeichnet, dass** der Aminoalkohol **A** und/oder dessen Salz als Mahlhilfsmittel zur Verbesserung der Mahleffizienz beim Mahlen des Feststoffs verwendet wird, insbesondere beim Mahlen eines mineralischen Bindemittels.

3. Verwendung nach einem der vorangehenden Ansprüche, **dadurch gekennzeichnet, dass** der Aminoalkohol **A** und/oder dessen Salz als Hilfsmittel zur Verbesserung der Stoffeigenschaften des Feststoffs, insbesondere zur Verbesserung von Zementeigenschaften beim Mahlen von zementösen Bindemitteln, eingesetzt wird.

4. Verwendung nach einem der vorangehenden Ansprüche, **dadurch gekennzeichnet, dass** der Aminoalkohol **A** vor und/oder während einem Mahlprozess des Feststoffs zum Feststoff zugegeben wird.

5. Verwendung nach einem der vorangehenden Ansprüche, **dadurch gekennzeichnet, dass** ein C₁- bis C₃-Carbonsäuresalz des Aminoalkohols **A** eingesetzt wird, wobei es sich insbesondere um ein Essigsäuresalz des Aminoalkohols **A** handelt.

6. Verwendung nach einem der vorangehenden Ansprüche, **dadurch gekennzeichnet, dass** R¹ und/oder R² für eine Isopropanolgruppe steht.

7. Verwendung nach einem der vorangehenden Ansprüche, **dadurch gekennzeichnet, dass** R³ eine Alkylgruppe, insbesondere mit 1 - 6 Kohlenstoffatomen, bevorzugt mit 1 - 4 Kohlenstoffatomen, darstellt.

8. Verwendung nach einem der vorangehenden Ansprüche, **dadurch gekennzeichnet, dass** der Aminoalkohol **A** ein N-Alkyldiisopropanolamin mit einer Alkylgruppe mit 1-6, insbesondere mit 1-4, Kohlenstoffatomen ist.

9. Verwendung nach einem der vorangehenden Ansprüche, **dadurch gekennzeichnet, dass** der Aminoalkohol **A** N-Methyldiisopropanoiamin ist.

10. Verwendung nach einem der vorangehenden Ansprüche, **dadurch gekennzeichnet, dass** der Aminoalkohol **A** in einer Menge von 0.001 - 1 Gew.-%, insbesondere 0.02 - 0.5 Gew.-%, bezogen auf das Gewicht des mineralischen Stoffs, verwendet wird.

11. Verwendung nach einem der vorangehenden Ansprüche, **dadurch gekennzeichnet, dass** der Feststoff wenigstens 5 Gew.-%, bevorzugt wenigstens 25 Gew.-%, insbesondere ≥ 95 Gew.-%, eines hydraulischen Bindemittels, bevorzugt Zement und/oder Zementklinker, enthält.

12. Verwendung nach einem der vorangehenden Ansprüche, **dadurch gekennzeichnet, dass** der Feststoff 5-95 Gew.-%, insbesondere 5-65 Gew.-%, eines latenthydraulischen und/oder puzzolanischen Bindemittels, insbesondere Schlacke und/oder Flugasche, enthält.

13. Zusammensetzung enthaltend einen Feststoff, insbesondere ein mineralisches Bindemittel, sowie einen Aminoalkohol **A** und/oder ein Salz des Aminoalkohols **A**, wobei der Aminoalkohol **A** eine Struktur gemäss Formel I aufweist: 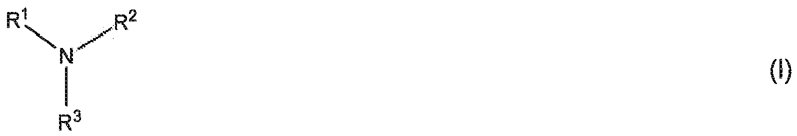 und wobei
a) R¹ und R² unabhängig voneinander je eine Alkanolgruppe mit 2 - 4 Kohlenstoffatomen darstellen,
b) R³ ein organischer Rest mit 1 - 8 Kohlenstoffatomen ist, und
c) R³ verschieden ist von R¹ und/oder R².

14. Formkörper, erhältlich durch Aushärten einer Zusammensetzung nach Anspruch 13.

15. Verfahren zur Herstellung einer Zusammensetzung nach Anspruch 13, insbesondere eines mineralischen Bindemittels, wobei ein wie in einem der Ansprüche 1-12 gemäss Formel definierter Aminoalkohol **A** und/oder ein Salz des Aminoalkohols **A** vor und/oder während einem Mahlprozess mit einem Feststoff, insbesondere einem mineralischen Bindemittel, bevorzugt einem zementösen Bindemittel, vermischt und vermahlen wird.
